# EUROPÄISCHE PATENTSCHRIFT

(11) **EP 2 298 830 B1**
(45) Veröffentlichungstag und Bekanntmachung des Hinweises auf die Patenterteilung: **09.11.2011**
(21) Anmeldenummer: 09170635.8
(22) Anmeldetag: 18.09.2009
(51) Int. Cl.: C08G 69/26, C08G 69/34, C08L 77/08

(54) **Hydrolysestabile Polyamide**
Hydrolysis stable polyamides
Polyamide stable pendant l'hydrolyse

(43) Veröffentlichungstag der Anmeldung: 23.03.2011
(73) Patentinhaber: Henkel AG & Co. KGaA, 40589 Düsseldorf (DE)
(72) Erfinder: Kopannia, Siegfried, Dr., 47809 Krefeld (DE); Becker, Bettina, 40789 Monheim (DE); Ticozzelli, Fabio, Dr., 20157 Milano (IT); Marchese, Luca, Dr., 20157 Milano (IT); Dwight, Heinrich, Aurora, IL 60504 (US); Nataniel, Tina, St. Charles, IL 60174 (US)

(56) Entgegenhaltungen:
- EP-A- 1 533 331
- EP-B- 0 749 463
- WO-A-2008/064950

## Beschreibung

Die Erfindung betrifft Polyamide, die für Spritzgussverfahren eingesetzt werden. Diese müssen eine geeignete Viskosität aufweisen und sollen eine verbesserte Stabilität gegen Hydrolyse zeigen.

Die EP 0749463 beschreibt Polyamidschmelzklebstoffe, die Polyamide auf Basis von dimerisierter Fettsäure enthalten sowie Calciumcarbonate als Füllstoff. Die Polyamide des Schmelzklebstoff enthalten nur unter 50 % Anteile von Dimerfettsäuren. Als weitere Komponente werden Polyetherdiamine sowie aliphatische Diamine mit 2 bis 40 C-Atomen eingesetzt. Es werden Polyamide mit Aminendgruppen beschrieben. Die Schmelzklebstoffe werden für die üblichen Klebstoffanwendungen beschrieben.

Beispielsweise sind auch Formteile auf Basis von Polyamiden bekannt. Die EP 1 533 331 beschreibt Polyamide auf Basis von C₁₈-C₂₄-Dimerfettsäuren als Formmasse zur Herstellung von Formteilen zum Herstellen von elektronischen Bauteilen im Spritzgussverfahren, wobei diese zusätzlich Dimerdiamine enthalten. Als Verwendung wird beschrieben, dass in solche flüssigen Schmelzklebstoff-Formteile andere Formteile, wie Kabel, Kabelsteckverbindung, Kontakthülsen usw., eingegossen werden können und so eine feste mechanische Verbindung ergeben. In den beschriebenen Ausführungsformen werden als Aminkomponente Dimerfettamine mit 24 bis 48 C-Atomen eingesetzt.

Die EP 0965627 beschreibt Polyamidschmelzklebstoffe, die auf Basis von Polymerfettsäuren und aliphatischen Dicarbonsäuren aufgebaut sind. Es werden Produkte mit gleichen Equivalenten COOH / Amin eingesetzt, alternativ werden Carboxylgruppen im leichten Überschuss eingesetzt. Als Anwendung werden die bekannten Klebstoffanwendungen der Schmelzklebstoffe beschrieben.

Die bekannten Polyamidschmelzklebstoffe können einerseits als typische Schmelzklebstoffe eingesetzt werden. Dabei ist es zweckmäßig, dass diese eine niedrige Viskosität haben und eine ausreichende offene Zeit, in der die geschmolzenen Klebstoffe die Substrate verkleben können. Dabei ist eine hohe Haftung zum Substrat erforderlich und es soll eine feste Verbindung zwischen den Substraten gegeben sein.

Werden Formteile auf Basis von Polyamiden eingesetzt, werden die Eigenschaften häufig so gewählt, dass eine gute mechanische Stabilität und Flexibilität der Polymere erhalten wird. Diese sollen dauerhaft flexibel bleiben, aber auch bei erhöhten Temperaturen einen formstabilen Gegenstand bilden. Dieses Verhalten ist entgegengesetzt zu Eigenschaften bei der Herstellung solche Teile, weil dabei eine niedrige Applikationsviskosität und eine niedrigere Erweichungstemperatur zweckmäßig ist. Für eine Anwendung als Formteil soll die mechanische Stabilität auch bei erhöhten Temperaturen gut sein. Deswegen ist es von Vorteil, wenn Schmelz- und Erweichungspunkte hoch gewählt werden.

Bei der dauerhaften Belastung von Polyamidformteilen hat sich gezeigt, dass diese gegen Hydrolyse nur im begrenzten Maß stabil sind. Das äußert sich darin, dass durch eine erhöhte Belastung von Feuchtigkeit und zusätzlich von Wärme die mechanischen Eigenschaften der Formteile sich verändern, Eigenschaften wie Dehnungsverhalten und Modul werden geringer. Damit ist die mechanische Stabilität solcher Formteile als Ganzes negativ beeinflusst und kann zu einem Versagen der Bauteile führen.

Aufgabe der vorliegenden Erfindung ist es deswegen, Polyamide bereit zu stellen, die für eine Verwendung als Formteil im Spritzgussverfahren geeignet sind. Dabei sollen diese eine niedrige Viskosität bei der Verarbeitungstemperatur aufweisen, gleichzeitig soll der Erweichungspunkt so hoch liegen, dass unter den Nutzungsbedingungen keine mechanische Überlastung des Formteils auftritt. Weiterhin sollen diese mechanischen Eigenschaften auch bei längerer Belastung durch Wasser und durch erhöhte Temperatur erhalten bleiben.

Die Aufgabe wird gelöst durch die Verwendung von Polyamiden auf Basis von Reaktionsprodukten aus mindestens einer Dimerfettsäure, mindestens einer aliphatischen Dicarbonsäure mit 6 bis 24 C-Atomen und aliphatischen, cyclo-aliphatischen und/oder Polyetherdiaminen, wobei die Mengen der Aminkomponente so gewählt werden, dass überwiegend Aminendgruppen enthalten sind und das Polyamid eine Aminzahl von 2 bis 20 mg KOH/g aufweist, zur Herstellung von Formteilen im Niederdruck-Spritzgussverfahren.

Die erfindungemäß geeigneten Polyamide sollen eine verminderte Aufnahme von Wasser zeigen. Das kann durch Auswahl und Menge der Amin- und Carbonsäurebestandteile erzielt werden. Weiterhin ist darauf zu achten, dass eine niedrige Verarbeitungsviskosität erhalten wird bei gleichzeitigem hohem Erweichungspunkt der Polyamide.

Erfindungsgemäß lassen sich für diesen Anwendungszweck Polyamide einsetzen, die aus folgenden Komponenten aufgebaut sind:
50 bis 98 mol% Dimer- bzw. Polymerfettsäure,
2 bis 50 mol% C₆ bis C₂₄ aliphatischer oder cycloaliphatischer Dicarbonsäure,
0 bis10 mol% C₁₂ bis C₁₈- Monocarbonsäuren,
wobei die Summe 100 mol% ergeben soll und
100 bis 60 mol% aliphatische und/ oder cycloaliphatische Diamine,
0 bis 40 mol% Polyoxyalkylen - Diamine,
wobei die Summe ebenfalls 100mol% ergeben soll. Dabei soll ein geringer Überschuss an Aminoequivalent gegen Carboxylequivalent vorliegen.

Dimer- bzw. Polymerfettsäuren im Sinne dieser Erfindung sind dabei solche Fettsäuren, die in bekannter Weise durch Dimerisierung aus natürlichen Rohstoffen gewonnen werden können. Diese werden aus ungesättigten langkettigen Fettsäuren hergestellt und anschließend durch Destillation gereinigt. Als technische Dimerfettsäure sind dabei je nach Reinheitsgrad weniger als 5 % monobasische Fettsäuren enthalten, im wesentlichen C₁₈-Fettsäuren wie Linolensäure oder Ölsäure, bis zu 98 Gew.% C₃₆-dibasische Fettsäuren (Dimerfettsäuren im engeren Sinne) und noch geringe Anteile höherer polybasischer Fettsäuren ("Trimersäuren"). Die relativen Verhältnisse der Monomer-, Dimer- und Trimerfettsäuren in dem Polymerfettsäuregemisch hängen von der Natur der eingesetzten Ausgangsverbindungen ab, sowie den Polymerisations- Dimerisations- bzw. Oligomerisationsbedingungen und dem Grad der destillativen Trennung. Durch Destillation aufgereinigte Dimerfettsäuren enthalten bis zu 98 Gew.% an dimerer Fettsäure. In einem weiteren Aufarbeitungsschritt können diese Dimerfettsäuren noch hydriert werden. Auch solche hydrierten Dimerfettsäuren können erfindungsgemäß eingesetzt werden.

Zusätzlich zu den Dimerfettsäuren soll die Säure-Komponente des Polyamids noch C₆-C₂₄-Dicarbonsäuren enthalten. Beispiele derartiger Dicarbonsäuren sind Succinsäure, Adipinsäure, Azelainsäure, Sebacinsäure, Undecandisäure, Dodecandisäure, Glutarsäure, Korksäure oder Pimelinsäure. Es können auch Anteile an aromatischen Dicarbonsäuren, wie zum Beispiel Terephthalsäure, Isophthalsäure oder Mischungen der vorgenannten Dicarbonsäuren bei der Synthesereaktion eingesetzt werden. Bevorzugt werden jedoch längerkettige aliphatische Dicarbonsäuren, beispielsweise von C₁₀ bis C₁₈, ausgewählt, dabei kann eine Wasseraufnahme des entstehenden Polyamids vermindert werden.

Es ist ebenfalls möglich Anteile von langkettigen Aminocarbonsäuren mit 10 bis 18 C-Atomen, wie 11-Aminoundecansäure oder auch Lauryllactam anstelle der Dicarbonsäuren zuzusetzen.

Die Diamin-Komponente besteht im wesentlichen aus einem oder mehreren aliphatischen Diaminen, wobei die Aminogruppen an den Enden der Kohlenstoffketten sind. Die aliphatischen Diamine können 2 bis zu 20 Kohlenstoffatome enthalten, wobei die aliphatische Kette linear oder verzweigt sein kann. Beispiele sind Ethylendiamin, Diethylentriamin, Dipropylentriamin, 1,4-Diaminobutan, 1,3-Pentandiamin, Methylpentandiamin, Hexamethylendiamin, Trimethyl-hexamethylendiamin, 2-(2-aminomethoxy)-ethanol, 2-Methylpentamethylendiamin, C₁₁-Neopentandiamin, Diaminodipropylmethylamin, 1,12-Diaminododecan oder Dimer-Diamine Besonders bevorzugte primäre Alkylendiamine sind C₂-C₁₂-Diamine mit einer geraden Anzahl an Kohlenstoffatomen.

Die Amino-Komponente kann weiterhin cyclische Diamine oder heterocyclische Diamine enthalten wie zum Beispiel 1,4-Cyclohexandiamin, 4,4'-Diamino-dicyclohexylmethan, Piperazin, Cyclohexan-bis-(methylamin), Isophorondiamin, Dimethylpiperazin, Dipiperidylpropan, Norbornan-diamin oder m-Xylylendiamin. Eine besondere Ausführungsform setzt eine Mischung aus Alkylendiaminen und cyclischen Diaminen ein.

Wenn das Polyaminoamid eine höhere Flexibilität aufweisen soll, können zusätzlich noch Polyoxyalkylendiamine, wie zum Beispiel Polyoxyethylendiamine, Polyoxypropylendiamine oder Polytetrahydrofurandiamine, zusätzlich verwendet werden. Dabei sind die Polyoxyalkylendiamine bevorzugt mit einem Molekulargewicht zwischen 150 und 4000 g/mol, vorzugsweise zwischen 300 und 3000 g/mol (Zahlenmittel, M_{N}). Als Aminkomponenten in den erfindungsgemäß geeigneten Polyamiden sind bevorzugt Polyetherpolyole mit primären Aminoendgruppen geeignet, insbesondere solche, die nicht oder nur geringfügig wasserlöslich sind, Beispiele dafür sind solche auf Basis von Polytetrahydrofuranen oder Polypropylenoxiden.

Bei der Auswahl der einzusetzenden monofunktionellen, difunktionellen oder trifunktionellen Rohstoffe ist zu berücksichtigen, dass schmelzbare, d.h. nicht vernetzte Produkte erhalten werden. Beispielsweise kann beim Auftreten von Vernetzungen oder Vergelungen durch Absenken des Anteils an trifunktionellen Komponenten (Trimerfettsäuren) und/oder Erhöhen des Gehalts an monofunktionellen Aminen oder Fettsäuren zu geeigneten Polyamiden gelangt werden. Durch den Aufbau von linearen Polyamiden wird auch eine niedrigere Viskosität erhalten.

Allgemein werden die Mengen der Amine und der Carbonsäuren so gewählt, dass die Polyamide einen Amingehalt zwischen 2 bis 20 mgKOH/g (DIN 53176 besitzen insbesondere soll die Aminzahl zwischen 2 bis 10 liegen. Durch die Auswahl der kurzkettigen Diamine und der aliphatischen Dicarbonsäuren sowie die Reinheit der Dimerfettsäure lassen sich sowohl die Viskosität und das Viskositäts-Temperatur-Profil sowie der Erweichungspunkt des Schmelzklebstoffes so einstellen, dass der Schmelzklebstoff für die erfindungsgemäße Verwendung geeignet ist. Das Molekulargewicht (gemessen als Gewichtsmittleres Molekulargewicht, M_{W}, wie über GPC erhältlich) kann zwischen 10000 und 200000 g/mol betragen, insbesondere zwischen 20000 und 120000 g/mol. Die Säurezahl des Polyamids ist gering, meistens unter 2 mgKOH/g, insbesondere unter 1 mg KOH/g.

Die entsprechenden Polyamidzusammensetzungen sollen in aufgeschmolzenem Zustand pumpbar sein und im Niederdruck-Spritzgussverfahren injiziert werden können. Die Viskosität der geeigneten Polyamide soll zwischen 300 und 100000 mPas betragen (gemessen im Bereich 180 bis 240°C, ASTM D3236), bevorzugt bis 50000 mPas, insbesondere von 500 bis zu 5000 mPas. Der Erweichungspunkt eines geeigneten Polyamids soll oberhalb von 120°C liegen ("Ring and Ball" - Methode ASTM E 28), insbesondere über 150°C bis zu 250°C.

Eine bevorzugt geeignete erfindungsgemäß zu verwendenden Ausführungsform setzt Polyamide herstellt aus Carbonsäuren ein, bestehend aus
50 bis 75 mol% Dimerfettsäuren,
25 bis 50 mol% aliphatischer oder cycloaliphatischer Dicarbonsäure mit 6 bis 24 C-Atomen, insbesondere C₁₀ bis C₁₈,
0 bis 10 mol% Monocarbonsäuren,
wobei die Summe der 100 mol% ergeben soll.

Eine andere Ausführungsform setzt Amine als Mischung ein, insbesondere 70 bis 98 mol% aliphatische und/oder cycloaliphatische Diamine, bevorzugt. insbesondere als Gemisch aliphatischer und cycloaliphatischer Diamine, insbesondere mit 2 bis 12 C-Atomen, sowie 2 bis 30 mol% Polyoxyalkylen-Diamine auf Basis von p-Tetrahydrofuran oder Polypropylenglykol, wobei die Summe ebenfalls 100mol% ergeben soll.

Insgesamt werden die Dicarbonsäuren vorzugsweise in bis zu 10 % stöchiometrischen Unterschuss gegenüber den Diaminen eingesetzt, so dass Amino - terminierte Polyamide entstehen.

Ein wesentliches Merkmal der erfindungsgemäß geeigneten Polyamide ist ihre Hydrolysebeständigkeit. Durch die Auswahl der Bestandteile auf eine verringerte Wasseraufnahme ist die Beständigkeit gegen Wasser/Feuchtigkeit erhöht. Erfindungsgemäß soll die Stabilität so gewählt werden, dass die Zugfestigkeit einer Probe durch eine Wasserbelastung und anschließender Trocknung um weniger als 20% vermindert wird. Als Test wird ein Prüfkörper für 1000h bei 85% rel. Luftfeuchtigkeit bei einer Temperatur von 85°C gelagert. Anschließend wird der Prüfkörper wieder auf einen Wassergehalt von ca. 0,05 % getrocknet. Dabei werden vorher und nachher die mechanischen Werte bestimmt. Die Polyamide nach der Erfindung sind so unter nassen oder feuchten Anwendungsbedingungen als stabile Formkörper geeignet.

Verfahren zum Herstellen von Polyamiden sind bekannt. Dabei werden die Rohstoffe aufgeschmolzen und getrocknet und in der Wärme miteinander umgesetzt. Dabei wird entstehendes Reaktionswasser aus der Mischung entfernt. Nach Erhalten des geeigneten Molekulargewichts wird das Polymer abgefüllt und abgekühlt. Das Polymer kann in Form von Blöcken, Stangen, Granulaten abgefüllt werden. Es können aber auch direkt nach der Polymersynthese die weiteren Zusatzstoffe zugesetzt werden.

Aus den erfindungsgemäß geeigneten Polyamiden können zusammen mit üblichen Zusatzstoffen schmelzbare Formmassen erhalten werden. Beispielsweise können Weichmacher, Haftvermittler, Stabilisatoren, Antischaummittel, Verlaufsmittel oder Füllstoffe zusätzlich enthalten sein. Weichmacher erhöhen die Plastizität der Zusammensetzungen, beispielsweise sind polare Weichmacher wie Ester, langkettige Amine, Sulfonester einsetzbar. Es ist dabei darauf zu achten, dass die nicht die Stabilität der Polymerketten beeinflussen. Weiterhin können unter Umständen in untergeordneten Mengen Füllstoffe eingesetzt werden, z.B. Silikate, Talk, Calciumcarbonate, Tone, Ruß oder Farbpasten bzw. Pigmente. Insbesondere sind die Formmassen jedoch frei von Füllstoffen.

Je nach dem Anwendungszweck kann es angebracht sein, die Zusammensetzung zu stabilisieren. Als Antioxidantien eignen sich dabei insbesondere die Antioxidantien vom Typ der sterisch gehinderten Phenole oder der aromatischen Aminderivate in Mengen bis zu 2,5 Gew.% bezogen auf das Polymer. Solche Produkte sind dem Fachmann bekannt. Als Formmassen zum Aufschmelzen sind die Zusammensetzungen frei von Lösemitteln.

Aus den aufschmelzbaren Polyamiden können nach bekannten Verfahren Zusammensetzungen zur Verwendung als Formmasse hergestellt werden. Das kann durch Zufügen der oben genannten Additive und Hilfsstoffe in der Schmelze geschehen. Die Bestandteile können auch kontinuierlich durch Mischen in einem Extruder homogenisiert werden. Das kann unmittelbar nach der Herstellung geschehen, es ist jedoch auch möglich, dass spezielle Zusammensetzungen auch erst unmittelbar vor der Verarbeitung gemischt werden.

Zur erfindungsgemäßen Verwendung werden die Formmassen aufgeschmolzen und danach im Niederdruck-Spritzgussverfahren eingesetzt.

Aus diesen Formmassen können Formteile durch bekannten Verarbeitungsverfahren hergestellt werden, beispielsweise durch Extrusion, Gießen, Spritzgießen, Pressen, Spritzpressen, Strangpressen usw. Erfindungsgemäß wird die Formmasse jedoch durch Niederdruck-Spritzgießen zu Formteilen verarbeitet. Dieser Spritzguss-Zyklus umfasst folgende Einzelschritte:
a) Die Form wird geschlossenen, nachdem eventuell zu verbindende Teile eingelegt wurden.
b) Die aufgeschmolzene Formmasse wird bis zu einem Druck zwischen 0,5 bis 50 bar in die Form eingespritzt und gegebenenfalls nachgedrückt.
c) Es wird gewartet, bis sich die Formmasse durch Abkühlung verfestigt hat.
d) Die Form wird geöffnet.
e) Die Spritzguss-Formteile werden der Form entnommen.

Im Niederdruckspritzgussverfahren wird meist im Bereich von 2 bis 40 bar gearbeitet, wobei die Temperatur zwischen 160 bis 250 °C beträgt.

Die erfindungsgemäßen als Formmasse verwendbaren Polyamidzusammensetzungen zeichnen sich durch eine hohe mechanische Stabilität aus. Dabei sind die Zusammensetzungen flexibel. Weiterhin zeichnen sie sich durch eine hohe mechanische Festigkeit aus, d.h. sie sind formstabil in die ursprünglich hergestellte Form.

Die erfindungsgemäßen Polyamide in den Formmassen zeichnen sich insbesondere durch eine hohe Stabilität gegen Feuchtigkeit aus. Solche nach der erfindungsgemäßen Verwendung herstellbaren Formteile werden häufig der Umwelt ausgesetzt, beispielsweise an der Luft oder im Erdreich. Dabei werden sie hohen Feuchtigkeitsbedingungen und wechselnden Temperaturen ausgesetzt. Die Feuchtigkeit kann bis zu 100 % betragen, die Temperaturen liegen im üblichen Temperaturbereich, beispielsweise zwischen -10°C und +90°C. Unter diesen Bedingungen hat sich gezeigt, dass die erfindungsgemäß einsetzbaren Polyamide eine hohe Stabilität haben. Auch unter längerem Einfluss von Feuchtigkeit und erhöhter Temperatur wird kein Abbau der Polyamidketten durch Wasser beobachtet. Es ist bekannt, dass Formteile unter solchen Bedingungen eine geringe Menge Wasser aufnehmen, dabei verändern sich die mechanischen Eigenschaften. Diese Veränderung zeigt sich in einem Verlust der mechanischen Stabilität. Auch nach Entfernen des aufgenommenen Wassers, wird die Ausgangsfestigkeit nicht erreicht. Bei Verwendung der erfindungsgemäßen Formmassen ist festzustellen, dass nach Trocknung und Entfernen des aufgenommenen Wassers nur eine geringe Abnahme der mechanischen Festigkeit oder der Reißdehnung festzustellen. Die Zusammensetzungen bzw. die Formteile aus den Zusammensetzungen weisen die gleichen mechanischen Festigkeiten auf, die vor der Wasserbelastung gegeben waren.

Durch die Verwendung der erfindungsgemäßen geeigneten Polyamide als Formmassen werden Formkörper, die eine hohe Stabilität gegen Umweltbedingungen aufweisen. Durch die niedrige Viskosität der Polyamide ist es möglich, diese im Niederdruck-Spritzgußverfahren anzuwenden. Dabei sind die Anforderungen an die Verarbeitungsgeräte geringer und die Verarbeitungszeiten sind kürzer. Das führt zu schnellen Verarbeitungs- und Herstellungszyklen, eine kostengünstige Produktion von Formteilen ist möglich.

### Beispiel 1:

Aus 62,46 mol% Dimerfettsäure, 37,54 mol% Sebacinsäure, 10,23 mol% Jeffamine D 2000, 48,98 mol-% Piperazin und 40,79 mol% Ethylendiamin wird in an sich bekannter Weise durch Kondensationsreaktion unter Entfernung des Reaktionswassers ein Polyamid hergestellt.

Kennzahlen: Aminzahl: 6 mg KOH/g, Schmelzviskosität: 4000 mPa.s bei 210°C, Erweichungspunkt: 160°C.

### Vergleichsbeispiel 2:

In gleicher Weise wird aus 62,10 mol% Dimerfettsäure, 37,90 mol% Sebacinsäure, 9,54 mol% Jeffamine D 2000, 50,95 mol-% Piperazin und 39,51 mol% Ethylendiamin in an sich bekannter Weise durch Kondensationsreaktion unter Entfernung des Reaktionswassers ein Polyamid hergestellt.

Kennzahlen: Säurezahl: 6 mg KOH/g, Schmelzviskosität: 4000 mPa.s bei 210°C, Erweichungspunkt: 150°C.

Aus den Polyamiden nach Beispiel 1 und 2 wird ein Prüfkörper in Form einer Hantel hergestellt und Reißdehnung, Zugfestigkeit und Viskosität gemessen.

Danach werden entsprechende Prüfkörper bei 85°C und 85% rel. Luftfeuchtigkeit gelagert. Nach 1000h werden die mechanischen Werte erneut bestimmt.

| | Beispiel 1 | Vergleich 2 |
|---|---|---|
| Zugfestigkeit [N/mm²] | 3,5 | 2,8 |
| Reißdehnung [%] | 440 | 410 |
| M_{w}(Molgewicht) | 43 000 | 41 000 |
| 1000 h Lagerung (nass ) | | |
| Zugfestigkeit | 2,6 | 1,0 |
| Reißdehnung | 260 | 40 |
| 1000 h (getrocknet) | | |
| Zugfestigkeit | 3,5 | 1,8 |
| Reißdehnung | 340 | 50 |
| Mw | 42 000 | 20 000 |

Zugfestigkeit/ Reißdehnung wurden nach DIN ISO 527 bestimmt.

Nach dem Trocknen und entfernen des aufgenommenen Wassers ist die mechanische Stabilität fast gleich geblieben. Ein Polymerabbau hat offensichtlich nicht stattgefunden. Der Vergleichsversuch zeigt einen Abbau der Polyamide.

## Patentansprüche

1. Verwendung von Polyamiden auf Basis von Reaktionsprodukten aus mindestens einer Dimerfettsäure, mindestens einer aliphatischen Dicarbonsäure mit 6 bis 24 C-Atomen und aliphatischen, cycloaliphatischen und/oder Polyetherdiaminen, wobei die Mengen der Aminkomponente so gewählt werden, dass überwiegend endständig Amingruppen enthalten sind und das Polyamid eine Aminzahl von 2 bis 20 mg KOH/g aufweist zur Herstellung von Formteilen im Niederdruck-Spritzgussverfahren.

2. Verwendung nach Anspruch 1, **dadurch gekennzeichnet, dass** das Polyamid enthält 50 bis 98 mol-% Dimerfettsäuren, 50 bis 2 mol-% C₆ bis C₂₄ -aliphatische Dicarbonsäuren, 0 bis 10 mol-% einer C₁₄ bis C₂₂ -Monocarbonsäure, 0 bis 40 mol-% Polyetherdiamine sowie 100 bis 60 mol-% aliphatische Diamine.

3. Verwendung nach einem der Ansprüche 1 oder 2, **dadurch gekennzeichnet, dass** die Aminkomponente aus einem Gemisch von aliphatischen und cycloaliphatischen Diaminen besteht.

4. Verwendung nach Anspruch 3, **dadurch gekennzeichnet, dass** das Polyamid mindestens 2 Mol% Polyetheramine enthält.

5. Verwendung nach einem der Ansprüche 1 bis 4, **dadurch gekennzeichnet, dass** das gewichtsmittlere Molekulargewicht (M_{w}) des Polyamids 10000 bis 200000 g/mol beträgt, insbesondere von 20000 bis 120000 g/mol.

6. Verwendung nach einem der Ansprüche 1 bis 5, **dadurch gekennzeichnet, dass** die Schmelzviskosität 300 bis 50000 mPas beträgt, gemessen bei 180 bis 240°C.

7. Verwendung nach Anspruch 6, **dadurch gekennzeichnet, dass** die Polyamid einen Erweichungspunkt von über 150°C aufweist.

8. Verwendung nach einem der Ansprüche 1 bis 7, **dadurch gekennzeichnet, dass** das Polyamid unter Wasserbelastung hydrolysestabil ist.

9. Verwendung nach Anspruch 8, **dadurch gekennzeichnet dass** die Zugfestigkeit vor und nach Wasserbelastung sich um weniger als 20 % ändert.

10. Verwendung nach einem der Ansprüche 1 bis 9, **dadurch gekennzeichnet, dass** die Zusammensetzung aus Polyamiden und als zusätzlichen Bestandteilen Pigmente, Stabilisatoren und Antioxidantien besteht.

11. Verwendung von Polyamiden nach Anspruch 1 bis 9 gegebenenfalls zusammen mit Einlegeteilen im Niederdruck-Spritzgussverfahren.

## Claims

1. Use of polyamides based on reaction products of at least one dimer fatty acid, at least one aliphatic dicarboxylic acid having 6 to 24 C atoms and aliphatic, cycloaliphatic and/or polyether diamines, wherein the quantities of the amine component are selected such that amine groups are predominantly contained in the end positions and the polyamide has an amine value of 2 to 20 mg KOH/g, for the production of molded parts in a low-pressure injection molding process.

2. The use according to claim 1, **characterised in that** the polyamide contains 50 to 98 mole % dimer fatty acids, 50 to 2 mole % C₆ to C₂₄ aliphatic dicarboxylic acids, 0 to 10 mole % of a C₁₄ to C₂₂ monocarboxylic acid, 0 to 40 mole % polyether diamines and 100 to 60 mole % aliphatic diamines.

3. The use according to one of claims 1 or 2, **characterised in that** the amine component consists of a mixture of aliphatic and cycloaliphatic diamines.

4. The use according to claim 3, **characterised in that** the polyamide contains at least 2 mole % polyether amines.

5. The use according to one of claims 1 to 4, **characterised in that** the weight average molecular weight (M_{w}) of the polyamide is 10000 to 200000 g/mol, in particular from 20000 to 120000 g/mol.

6. The use according to one of claims 1 to 5, **characterised in that** the melt viscosity is 300 to 50000 mPas measured at 180 to 240°C.

7. The use according to claim 6, **characterised in that** the polyamide has a softening point of over 150°C.

8. The use according to one of claims 1 to 7, **characterised in that** the polyamide is hydrolytically stable on exposure to water.

9. The use according to claim 8, **characterised in that** the tensile strength changes by less than 20% before and after exposure to water.

10. The use according to one of claims 1 to 9, **characterised in that** the composition consists of polyamides and, as additional components, pigments, stabilizers and antioxidants.

11. The use of polyamides according to claims 1 to 9 optionally together with inserts in a low-pressure injection molding process.

## Revendications

1. Utilisation de polyamides à base de produits de réaction d'au moins un acide gras dimère, d'au moins un acide dicarboxylique aliphatique comprenant 6 à 24 atomes de carbone et de diamines aliphatiques, cycloaliphatiques et/ou de polyétherdiamines, les quantités du composant amine étant choisies de manière à ce que ce sont principalement des groupes amine en position terminale qui sont contenus et le polyamide présentant un indice d'amine de 2 à 20 mg de KOH/g pour la fabrication de pièces moulées dans des procédés de moulage par injection à basse pression.

2. Utilisation selon la revendication 1, **caractérisée en ce que** le polyamide contient 50 à 98% en mole d'acides gras dimères, 50 à 2% en mole d'acides dicarboxyliques aliphatiques en C₆ à C₂₄, 0 à 10% en mole d'un acide monocarboxylique en C₁₄ à C₂₂, 0 à 40% en mole de polyétherdiamines ainsi que 100 à 60% en mole de diamines aliphatiques.

3. Utilisation selon l'une quelconque des revendications 1 ou 2, **caractérisée en ce que** le composant amine est constitué par un mélange de diamines aliphatiques et cycloaliphatiques.

4. Utilisation selon la revendication 3, **caractérisée en ce que** le polyamide contient au moins 2% en mole de polyétheramines.

5. Utilisation selon l'une quelconque des revendications 1 à 4,
**caractérisée en ce que** le poids moléculaire pondéral moyen (M_{w}) du polyamide est de 10000 à 200 000 g/mole, en particulier de 20 000 a 120 000 g/mole.

6. Utilisation selon l'une quelconque des revendications 1 à 5, **caractérisée en ce que** la viscosité de la masse fondue est de 300 à 50 000 mPa.s, mesurée à 180 jusqu'à 240°C.

7. Utilisation selon la revendication 6, **caractérisée en ce que** le polyamide présente un point de ramollissement supérieur à 150°C.

8. Utilisation selon l'une quelconque des revendications 1 à 7, **caractérisée en ce que** le polyamide est stable à l'hydrolyse sous une charge hydrique.

9. Utilisation selon la revendication 8, **caractérisée en ce que** la résistance à la traction avant et après la charge hydrique est modifiée de moins de 20%.

10. Utilisation selon l'une quelconque des revendications 1 à 9, **caractérisée en ce que** la composition est constituée de polyamides et, comme constituants supplémentaires, de pigments, de stabilisateurs et d'antioxydants.

11. Utilisation de polyamides selon la revendication 1 à 9, le cas échéant ensemble avec des insertions, dans le procédé de moulage par injection à basse pression.
